# EUROPÄISCHE PATENTSCHRIFT

(11) **EP 0 730 253 B1**
(45) Veröffentlichungstag und Bekanntmachung des Hinweises auf die Patenterteilung: **18.06.2003**
(21) Anmeldenummer: 96101556.7
(22) Anmeldetag: 03.02.1996
(51) Int. Cl.: G07F 7/10, G07C 9/00

(54) **Verfahren zur Erzeugung und Verteilung unpersonalisierter vertraulicher elektronischer Schlüssel**
Method for generating and distributing unpersonalised and confidential electronic keys
Méthode pour la production et la distribution de cléfs électroniques non-personalisées et confidentielles

(30) Priorität: 01.03.1995 DE 19507043
(43) Veröffentlichungstag der Anmeldung: 04.09.1996
(73) Patentinhaber: Deutsche Telekom AG, 53113 Bonn (DE)
(72) Erfinder: Moos, Rainer, D-57080 Siegen (DE); Mettken, Werner, Dipl.-Ing., D-59969 Hallenberg (DE)

(56) Entgegenhaltungen:
- EP-A- 0 566 811
- DE-A- 3 927 270
- US-A- 4 453 074
- US-A- 4 650 975

## Beschreibung

Die Erfindung bezieht sich auf ein Verfahren nach dem Oberbergriff des Patentanspruchs 1. Derartige Verfahren sind aus vielen Anwendungsbereichen elektronischer Schlüssel bekannt.

Bisherige Konzepte zur vertrauenswürdigen Absicherung von Informationen mit kryptographischen Verfahren gehen davon aus, daß eine geeignete Instanz in gesicherter Umgebung Schlüssel erzeugt, personalisiert, d. h. mit einer Identität verknüpft, und in ein gesichertes Medium verbringt. Die personalisierende Instanz verwaltet, pflegt und verteilt die Verknüpfungsinformation (Zertifikat). Der Benutzer des Verfahrens wendet das Schlüsselsystem an und verteilt damit verbunden seine eigene Identität.

Zur Zeit der Schlüsselerzeugung müssen alle notwendigen Daten zur Personalisierung des Schlüssels bekannt sein. Dies bedeutet, daß nicht mit Vorlauf gearbeitet werden kann. Weiterhin sind so erzeugte Schlüsselträger (z.B. Chipkarten) sofort sicherheitskritische Komponenten, da sie das Geheimnis und das Zertifikat enthalten. Ebenso ist zu diesem Zeitpunkt auch die ggf. notwendige persönliche Identifikationsnummer (PIN) dem Personalisierer bekannt.

Um dem Inhaber des Schlüssels Vertrauenswürdigkeit zu gewährleisten, muß ein sehr großer organisatorischer und technischer Aufwand zur Geheimhaltung dieser Informationen betrieben werden.

Die Merkmale des Oberbegriffs von Anspruch 1 sind aus EP-A- 0,566,811 bekannt.

Eine Verbesserung gegenüber dieser allgemein üblichen Verfahrensweise ist in der DE-PS 3927 270 beschrieben.

Hierbei werden die Schlüsselgeheimnisse vorpersonalisiert und in Schlüsselmedien abgelegt. Diese so vorpersonalisierten Schlüsselträger werden an dezentralen Ausgabestellen bevorratet. In einem späteren Arbeitsgang werden die Zertifikate zentral erzeugt und über einen sicheren Kanal in die zugehörigen Medien abgespeichert.

Mit der Erfindung soll erreicht werden, daß die Schlüsselträger mit einem unpersonalisierten vertraulichen elektronischen Schlüssel und zugehörigen Zertifikaten in unbegrenzter Zahl im Vorlauf erzeugt und verteilt werden können, ohne die Zertifikate bei der Personalisierung mit dem Geheimnis zusammen in einen Schlüsselträger zu schreiben und ohne daß die Identität des späteren Inhabers oder die Anwendung bekannt bzw. festgelegt sind. Weiterhin soll es auch nicht notwendig sein, entsprechend dem verbesserten Verfahren die Zertifikate später nachzuladen.

Diese Aufgabe wird erfindungsgemäß durch die im Kennzeichen des Patentanspruchs 1 beschriebene Verfahrensweise gelöst.

Vorteilhafte Weiterbildungen des Verfahrens sind in den Kennzeichen der Unteransprüche 2 und 3 beschrieben.

Im Gegensatz zu bisherigen Ansätzen werden in diesem Verfahren die Anwendungszuordnungen nicht im Schlüsselträger vermerkt. Allein der Betreiber einer Anwendung bestimmt und verwaltet die Teilnahmeberechtigungen mittels der durch das Kryptoverfahren bereitgestellten festen Verknüpfung von Geheimnis und Zertifikat.

Die Realisierungsmöglichkeiten und Vorteile der Erfindung werden im nachfolgenden Ausführungsbeispiel näher erklärt.

Eine Schlüssel ausgebende Instanz erzeugt beliebig viele Schlüsselträger mit Schlüssel zur Deckung des voraussichtlichen Bedarfs. Die geheimzuhaltende Komponente wird dabei in den besonders geschützten Bereich eines Trägermediums gespeichert. Dazu wird ein Erzeugersiegel und eine Referenzinformation in den weniger gesicherten Bereich abgelegt. Die Referenz wird als Identifikation auf dem Schlüsselmedium visualisiert (z.B. auf. den Schlüsselträger aufgedruckt). Das Geheimnis wird danach entweder vernichtet, oder getrennt mehrfach gesichert archiviert.

Die so erzeugten Schlüsselträger werden mit einer allgemeingültigen Hersteller-PIN versehen und bevorratet. Die fest zugehörige öffentliche Schlüsselkomponente wird zusammen mit einer zweiten Referenzinformation bei der ausgebenden Instanz gespeichert. Dabei gilt, daß die erste Referenz auf dem geheimen Teil ungleich der zweiten Referenz auf dem öffentlichen Teil ist.

Die Personalisierungsinstanz verwaltet die Verknüpfung der beiden Referenzen. Die Verknüpfung ist nur dem Personalisierer und dem rechtmäßigen Inhaber des Schlüssels bekannt.

Soll ein Schlüssel einem Benutzer zugeordnet, d. h. personalisiert werden, muß dessen Identität dem Personalisierer eindeutig bekanntgemacht und belegt werden. Anschließend bekommt der Interessent einen beliebigen Schlüsselträger mit der Aufforderung ausgehändigt, sofort nach Erhalt die Hersteller-PIN auf eine Individual-PIN zu ändern und den Empfang schriftlich zu bestätigen. Mit diesem Vorgang wird der Schlüsselträger physikalisch einer Person zugeordnet. Die außen erkennbare Referenz wird dem Auftraggeber zugeordnet.

Nach Eingang der Empfangsbestätigung reproduziert die Personalisierungsinstanz mittels der Referenzverknüpfung die öffentliche Schlüsselkomponente, zertifiziert die Verknüpfung des öffentlichen Teils mit der Benutzeridentität, stellt das Zertifikat in das öffentliche Schlüsselverzeichnis ein und sendet dem Benutzer eine beglaubigte Kopie des Eintrages zu.

Will ein beliebiger Benutzer des Schlüsselsystems mit einem anderen vertraulich Informationen austauschen, benötigt er dessen Zertifikat bzw. die daraus resultierende öffentliche Schlüsselkomponente. Dazu stehen, je nach Realisierung, beliebige Suchkriterien (Name, Vorname, Zertifikatsnummer, usw.) zur Verfügung.

Wendet im anderen Fall ein Systembeteiligter seine geheime Komponente an (z.B. elektronische Signatur), kann er dem Empfänger der so bearbeiteten Information entweder das komplette Zertifikat oder auch lediglich die Referenz darauf mitteilen. Als Zusatzinformation gibt der Erzeuger der Information die Herkunft des Schlüssels (Erzeugersiegel) an. Der Empfänger kann mit der öffentlichen Komponente aus dem mit übertragenen Zertifikat eine Verifikation durchführen, oder er besorgt sich dazu mittels der Referenz das Zertifikat aus dem öffentlichen Schlüsselverzeichnis.

Soll ein Schlüssel, bzw. ein Zertifikat, innerhalb einer neuen Umgebung (z.B. Zutrittskontrollanlagen, Kreditkartenanwendungen usw.) Gültigkeit bekommen, muß der Betreiber dieser Anwendung lediglich das Zertifikat anerkennen. Damit kann der Inhaber des zugeordneten Schlüssels an dieser Anwendung teilnehmen, ohne daß irgend ein Eintrag im Schlüsselträger notwendig ist. Eine andere Möglichkeit besteht darin, zu einem von einer vertrauenswürdigen Instanz ausgegebenen Schlüssel anwendungsbezogene Sub-Zertifikate zu erzeugen, zu verwalten und zu pflegen und damit geschlossene Anwendungen zu erzeugen.

Die auf Vorrat produzierbaren Schlüssel sind nicht besonders schutzbedürftig, da das Medium sein Geheimnis nicht preisgibt und es auch nicht mit einer bestimmten Identität verknüpft ist.

Dem Schlüssel braucht keine Individual-PIN zugeordnet zu werden. Somit entfällt auch die Erzeugung, Verwaltung und der getrennte Versand der PIN-Briefe.

Ausgegebene Schlüsselträger sind nicht offensichtlich einer bestimmten Identität zugeordnet. Deshalb kann ein solches Medium "offen herumliegen", denn die Zertifizierungsinstanz (hier das öffentliche Schlüsselverzeichnis) gibt auf Anfrage mit der Referenz auf den Träger (das Geheimnis) kein Zertifikat heraus. Selbst wenn der "Finder" eines solchen Schlüssels die PIN kennt, kann er das Referenzzertifikat nur erraten.

Schlüsselträger, die für Aufgaben innerhalb bestimmter Organisationen (z.B. Sachbearbeiter innerhalb einer Firma), ausgegeben werden, können ihre Zuordnung wechseln, ohne daß das Medium getauscht wird. Es wird lediglich ein neues Zertifikat erzeugt und zugeordnet. Das Schlüsselmedium wird übergeben und der neue Inhaber verändert die PIN.

Nach diesem Verfahren erzeugte Schlüssel sind in ihrer Funktionalität herkömmlichen Schlüsseln (von Schloß mit Schlüssel) sehr ähnlich und können wie solche behandelt werden. Ein offen irgendwo auf der Straße liegender Schlüssel stellt für den Finder keinen Wert dar, denn die Zuordnung zum Schloß ist ihm nicht bekannt.

Ein weiterer entscheidender Vorteil des Verfahrens liegt darin, daß der oft sehr begrenzte Raum zum Speichern von Schlüsseln im geeigneten Speichermedium (z.B. Chipkarten) besser ausgenutzt werden kann; denn die Anwendungszuordnung wird in den Anwendungsumgebungen festgehalten und belastet so nicht das Schlüsselmedium.

Die Schlüssel sind anwendungsneutral. Das bedeutet, daß ein Schlüssel in beliebig vielen Anwendungen Gültigkeit haben kann, ohne daß hierfür zusätzliche Eintragungen notwendig sind.

Die Schlüssel sind anonym, denn nur die Personalisierungsinstanz und der rechtmäßige Eigentümer kennen die Zuordnung zur Identität.

Bei einem notwendigen Wechsel des Zertifizierungsschlüssels können zu den bis dahin ausgegebenen Schlüsseln neue Zertifikate erzeugt werden, ohne auf die Schlüsselmedien zugreifen zu müssen.

Zu einem Schlüssel können mehrere Zertifikate existieren. Damit können geschlossene Benutzergruppen gebildet werden, ohne immer neue Schlüssel zu erzeugen.

## Patentansprüche

1. Verfahren zur Erzeugung und Verteilung unpersonalisierter vertraulicher elektronischer Schlüssel, wobei unpersonalisierte Schlüsselträger zur Bevorratung mit einer allgemeingültigen Hersteller-PIN versehen und mit einem Schlüssel vorproduziert werden, welcher eine geheimzuhaltende Komponente im besonders geschützten Bereich enthält, **dadurch gekennzeichnet daß** die unpersonalisierten schlüsselanhänger mit einer sichtbaren Referenzidentifikation versehen sind sowie ein Erzeugersiegel und eine Referenzinformation im weniger geschützten Bereich enthalten, daß die fest zugehörige öffentliche Schlüsselkomponente zusammen mit einer zweiten ungleichen Referenzinformation bei der Ausgabeinstanz gespeichert werden und daß erst bei der Zuordnung eines Schlüssels zu einem Benutzer dieser die Hersteller-PIN in eine Individual-PIN ändert, den Schlüsselerhalt quittiert und seine Identität der Personalisierungsinstanz nachweist, welche die beiden Referenzen verwaltet, die öffentliche Schlüsselkomponente personalisiert, versiegelt, in das Schlüsselverzeichnis einträgt und dem Benutzer bestätigt.

2. Verfahren nach Anspruch 1, **dadurch gekennzeichnet, daß** die sichtbare Referenzidentifikation einem Auftraggeber zugeordnet wird.

3. Verfahren nach Anspruch 1, **dadurch gekennzeichnet, daß** mit Hilfe der öffentlichen Komponente bzw. dem Erzeugersiegel eine Verifikation durchgeführt wird.

## Claims

1. Process for generating and distributing impersonalized confidential electronic keys, wherein, for supplying with a visible reference identification, impersonalized key carriers are provided with a generally valid manufacturer PIN and are preproduced with a key containing a to-be-kept-secret component in the especially protected area, **characterized in that** the impersonalized key fobs are provided with a visible reference identification and contain a generator seal and a reference information in the less protected area; **in that** the fixedly associated public key component is stored with the issuing agency together with a second unidentical reference information; and **in that** only when a key is assigned to a user does the user change the manufacturer PIN into a personal PIN, acknowledge receipt of the key and furnish proof of his/her identity to the personalizing agency, which personalizing agency administers the two references, personalizes and seals the public key component, enters it in the key directory and sends confirmation to the user.

2. Process according to claim 1, **characterized in that** the visible reference identification is assigned to an ordering party.

3. Process according to claim 1, **characterized in that** verification is performed using the public component and/or the generator seal.

## Revendications

1. Procédé pour la génération et la répartition de clés électroniques confidentielles non personnalisées, les supports de clés non personnalisés étant dotés, en vue de l'approvisionnement, d'un code PIN fabricant général et produits avec une clé qui contient un composant qu'il convient de garder secret dans la zone particulièrement protégée, **caractérisé en ce que** les étiquettes de clés non personnalisées sont dotées d'une identification de référence visible ainsi que d'un sceau du producteur et d'une information de référence dans la zone moins protégée, **en ce que** la clé publique correspondante est enregistrée, avec une deuxième information de référence différente, auprès de l'instance de délivrance et **en ce que** ce n'est qu'au moment de l'attribution d'une clé à un utilisateur que celui-ci modifie le code PIN fabricant en un code PIN personnel, acquitte la réception de la clé et prouve son identité à l'instance de personnalisation laquelle gère les deux références, personnalise la clé publique, la scelle, l'inscrit dans le répertoire des clés et la confirme à l'utilisateur.

2. Procédé selon revendication 1, **caractérisé en ce que** l'identification de référence visible est attribuée à un donneur d'ordre.

3. Procédé selon revendication 1, **caractérisé en ce qu'**une vérification est effectuée à l'aide de la clés publique ou du sceau du producteur.
